# EUROPEAN PATENT APPLICATION

(11) **EP 4 848 088 A1**
(43) Date of publication of application: **02.12.2026**
(21) Application number: 26176851.9
(22) Date of filing: 06.05.2026
(51) Int. Cl.: G06F 9/50

(54) **MANAGEMENT APPARATUS, MANAGEMENT METHOD, AND MANAGEMENT PROGRAM**

(30) Priority: 13.05.2025 JP 2025080448
(71) Applicant: Yokogawa Electric Corporation, Musashino-shi, Tokyo 180-8750 (JP)
(72) Inventor: KONISHI, Takumi, Musashino-shi, Tokyo, 180-8750 (JP)
(74) Representative: Winter, Brandl - Partnerschaft mbB

(57) **Abstract**

A management server(10) issues a transaction token corresponding to a size of a requested resource that is requested by a first controller (30-1) among a plurality of controllers (30) that are included in a system, and acquires, when the requested resource is traded between the first controller (30-1) and a second controller (30-2) that has acquired the transaction token, a token trading history of transmission of a held token corresponding to a size of the first token from the first controller (30-1) to the second controller (30-2).

## Description

### FIELD

The present disclosure is related to a management apparatus, a management method, and a management program.

### BACKGROUND

In an open process automation system and an industrial control system (simply referred to as a "system" as appropriate), resource allocation, application migration, security management, and the like are performed among a plurality of controllers (see, for example, U.S. Patent Application Publication No. 2023/0342200 Specification).

However, in the technology as described above, it is difficult to optimize resource management in the system. For example, in the technology as described above, it is difficult to dynamically perform resource allocation and enhance security of the system.

The present disclosure has been conceived in view of the foregoing situations, and an object of the present disclosure is to optimize resource management in the system.

### SUMMARY OF THE INVENTION

According to an aspect of the embodiments, a management apparatus including a processor that issues a first token corresponding to a size of a requested resource that is requested by a first device among a plurality of devices that are included in a system, and acquires, when the requested resource is traded between the first device and a second device that has acquired the first token, a token trading history of transmission of a second token corresponding to a size of the first token from the first device to the second device.

According to an aspect of the embodiments, a management method implemented by a computer, the management method including issuing a first token corresponding to a size of a requested resource that is requested by a first device among a plurality of devices that are included in a system, and acquiring, when the requested resource is traded between the first device and a second device that has acquired the first token, a token trading history of transmission of a second token corresponding to a size of the first token from the first device to the second device.

According to an aspect of the embodiments, a management program that causes a computer to execute a process, the process including issuing a first token corresponding to a size of a requested resource that is requested by a first device among a plurality of devices that are included in a system, and acquiring, when the requested resource is traded between the first device and a second device that has acquired the first token, a token trading history of transmission of a second token corresponding to a size of the first token from the first device to the second device.

### BRIEF DESCRIPTION OF THE DRAWINGS

FIG. 1 is a diagram illustrating a configuration example and a process example of a plant management system according to one embodiment;
FIG. 2 is a block diagram illustrating a configuration example of each of apparatuses in the plant management system according to one embodiment;
FIG. 3 is a diagram illustrating an example of a resource usage status storage unit of a management server according to one embodiment;
FIG. 4 is a diagram illustrating an example of a resource trading history storage unit of the management server according to one embodiment;
FIG. 5 is a diagram illustrating an example of a token trading history storage unit of the management server according to one embodiment;
FIG. 6 is a diagram illustrating an example of a blockchain database according to one embodiment;
FIG. 7 is a diagram illustrating a specific example of an overall configuration of the plant management system;
FIG. 8 is a diagram illustrating a specific example of a base state in resource management performed by the plant management system;
FIG. 9 is a diagram illustrating a specific example of load increase in the resource management performed by the plant management system;
FIG. 10 is a diagram illustrating a specific example of transaction token issuance in the resource management performed by the plant management system;
FIG. 11 is a diagram illustrating a specific example of transaction token acceptance in the resource management performed by the plant management system;
FIG. 12 is a diagram illustrating a specific example of distributed ledger update in the resource management performed by the plant management system;
FIG. 13 is a flowchart illustrating an example of a flow of an entire process of the plant management system according to one embodiment;
FIG. 14 is a flowchart illustrating an example of the flow of a resource monitoring process performed by the plant management system according to one embodiment;
FIG. 15 is a flowchart illustrating an example of the flow of a token management process performed by the plant management system according to one embodiment;
FIG. 16 is a flowchart illustrating an example of the flow of a token trading process performed by the plant management system according to one embodiment;
FIG. 17 is a flowchart illustrating an example of the flow of a distributed ledger management process performed by the plant management system according to one embodiment; and
FIG. 18 is a diagram illustrating a hardware configuration example according to one embodiment.

### DETAILED DESCRIPTION OF THE PREFERRED EMBODIMENTS

Embodiments of a management apparatus, a management method, and a management program according to one embodiment of the present disclosure will be described in detail below with reference to the drawings. Meanwhile, the present disclosure is not limited by the embodiments described below.

A configuration and a process of a plant management system 100 according to one embodiment, a configuration and a process of each of apparatuses of the plant management system 100, a specific example of each of processes of the plant management system 100, a flow of each of the processes of the plant management system 100, and effects of one embodiment will be described below.

### 1. Configuration and process of plant management system 100

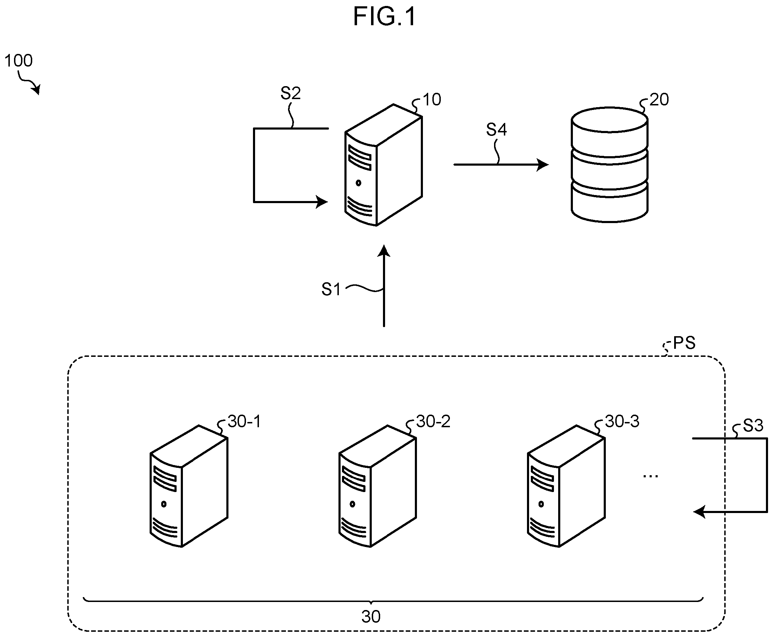

A configuration and a process of the plant management system 100 according to one embodiment will be described below with reference to FIG. 1. FIG. 1 is a diagram illustrating a configuration example and a process example of the plant management system 100 according to one embodiment. In the following, an overall configuration example of the plant management system 100, an overall process example of the plant management system 100, and effects of the plant management system 100 will be described.

### 1-1. Overall configuration example of plant management system 100

An overall configuration example of the plant management system 100 will be described. The plant management system 100 includes a management server 10, a blockchain database 20, and controllers 30 (30-1, 30-2, 30-3, ...). Here, the management server 10, the blockchain database 20, and the controllers 30 are communicably connected to one another via a predetermined communication network (not illustrated) in a wired or wireless manner. Meanwhile, various kinds of communication networks, such as the Internet or a dedicated line, may be adopted as the predetermined communication network.

### 1-1-1. Management server 10

The management server 10 is a management apparatus that manages a plant PS in an open process automation system. For example, the management server 10 is implemented by a cloud environment, an on-premises environment, an edge environment, or the like. Further, the management server 10 may be implemented by a desktop Personal Computer (PC), a notebook PC, a tablet terminal, a smartphone, or the like. Meanwhile, the plant management system 100 illustrated in FIG. 1 may include the plurality of management servers 10. Here, the open process automation system is a system that is constructed by using an open standard that is not a unique standard, as the standard for a protocol, a database, a programming language, and the like.

### 1-1-2. Blockchain database 20

The blockchain database 20 is a storage apparatus for storing, as a distributed ledger, a blockchain that is registered by the management server 10. Meanwhile, the blockchain database 20 may be integrated with the management server 10. Further, the plant management system 100 illustrated in FIG. 1 may include the plurality of blockchain databases 20.

### 1-1-3. Controllers 30

The controllers 30 (30-1, 30-2, 30-3, ...) are plant devices that are included in the plant PS and control communication devices and field devices for each of processes. For example, the controllers 30 are implemented by Distributed Control Nodes (DCNs) or the like that are able to execute a smart contract. Meanwhile, the controller 30 that requests a resource among the controllers 30 may be described as a "controller 30A" or a "first device". Further, the controller 30 that provides a resource among the controllers 30 may be described as a "controller 30B" or a "second device".

### 1-2. Overall process example of plant management system 100

An overall process example of the plant management system 100 will be described. Meanwhile, processes from Step S1 to Step S4 below may be performed in different order. Further, some of the processes from Step S1 to Step S4 below may be omitted.

### 1-2-1. Resource usage status acquisition process

Firstly, the management server 10 performs a resource usage status acquisition process (Step S1). For example, the management server 10 acquires, at intervals of one second, a usage status of a Central Processing Unit (CPU), a memory, a network bandwidth, or the like as a physical resource that is used by the controller 30-1. Further, the management server 10 acquires, at intervals of one second, a usage status of a CPU, a memory, a network bandwidth, or the like as a physical resource that is used by the controller 30-2. Furthermore, the management server 10 acquires, at intervals of one second, a usage status of a CPU, a memory, a network bandwidth, or the like as a physical resource that is used by the controller 30-3.

Here, a physical resource that is used by each of the controllers 30 will be described as a "used resource". Further, a maximum physical resource that is available to each of the controllers 30 will be described as a "maximum resource". Furthermore, a physical resource that is obtained by eliminating the used resource from the maximum resource of each of the controllers 30 will be described as an "available resource". Moreover, a physical resource that exceeds from the maximum resource of each of the controllers 30 will be described as a "requested resource".

Furthermore, a token that is issued by the management server 10 and corresponds to a size of the requested resource will be described as a "transaction token" or a "first token". Moreover, a token that is held by each of the controllers 30 and that is available for transaction will be described as a "held token" or a "second token".

In this case, each of the controllers 30 has a token holding area corresponding to the maximum size of the available resource, that is, the size of the maximum resource. Furthermore, each of the controllers 30 holds the held token corresponding to a size of the used resource within a range of the token holding area of each of the controllers 30.

### 1-2-2. Token additional issuance process

Secondly, the management server 10 performs a token additional issuance process (Step S2). For example, when a calculation load is unexpectedly placed on the controller 30-1 and the size of the maximum resource is exceeded, the management server 10 issues a transaction token corresponding to an excess size, that is, the size of the requested resource, to a storage area that can be referred to by each of the controllers 30. Here, a size of the held token of the controller 30-1 increases in accordance with the calculation load. For example, the size of the held token of the controller 30-1 is doubled when the calculation load is doubled. Further, the management server 10 issues a transaction token corresponding to a size that exceeds an upper limit of the token holding area in the held token of the controller 30-1.

In this case, the management server 10 issues the transaction token based on a transaction token issuance request that is transmitted from the controller 30-1. Further, the management server 10 may issue the transaction token based on the acquired resource usage status.

### 1-2-3. Token transaction process

Thirdly, the controller 30 performs a token trading process (Step S3). For example, when the controller 30-3 is able to accept the transaction token, that is, when the controller 30-3 has an extra available resource, the controller 30-3 accepts the transaction token that is issued by the management server 10. Here, "acceptance" indicates that the transaction token issued by the controller 30 is temporarily received, and may be described as "token acceptance".

Further, the controller 30-1 trades the available resource by transmitting, to the controller 30-3, a control application in which a resource corresponding to the calculation load has the same size as the transaction token, for example. In the following, trading of the available resource among the controllers 30 may be described as "resource trading". Furthermore, a mode of the resource trading for distributing resources by transmission and reception of the control application may be described as "application migration". Moreover, a mode of the resource trading for temporarily allowing a different device to use an available area of the CPU, the memory, the network bandwidth, or the like of the subject device, or distributing a resource by alternatively executing a process, such as data communication, without via the control application may be described as "resource distribution".

Furthermore, the controller 30-1 trades the held token by transmitting the own held token that has the same size as the transaction token to the controller 30-3. Meanwhile, the size of the held token need not always be the same size, but may be a size that is proportional to the size of the transaction token. In the following, trading of the held token among the controllers 30 may be described as "token trading".

Moreover, when trading of the available resource and trading of the held token are completed, the controller 30-3 returns the transaction token to the management server 10. Here, "return" indicates that the temporarily received transaction token is sent to the controller 30.

In this case, when any of the controllers 30 is not able to independently accept the transaction token, that is, when the controller 30 that has an extra available resource corresponding to the transaction token is absent, the management server 10 is able to divide the transaction token. For example, each of the controller 30-2 and the controller 30-3 is able to accept a half of the transaction token. Furthermore, when dividing the transaction token, the management server 10 adds a transaction token corresponding to an installment fee.

### 1-2-4. Blockchain registration process

Fourthly, the management server 10 performs a blockchain registration process (Step S4). For example, the management server 10 register a resource usage status that indicates the used resource of each of the controllers 30 in a blockchain, as a distributed ledger, that is stored in the blockchain database 20. Further, the management server 10 registers, in the blockchain that is stored in the blockchain database 20, a resource trading history that is a trading history of the available resource, and a token trading history that is a trading history of the held token.

### 1-3. Effects of plant management system 100

In the following, an overview and problems of a plant management system 100-P according to a reference technology will be first described, and thereafter, effects of the plant management system 100 according to one embodiment will be described.

### 1-3-1. Overview of plant management system 100-P

In the plant management system 100-P according to the reference technology, resource management is performed in an open process automation system or an industrial control system. In the following, resource allocation, application migration, and security management will be described as the resource management that is performed by the plant management system 100-P.

### 1-3-1-1. Resource allocation

In the plant management system 100-P, allocation of a physical resource (for example: a CPU, a memory, a network bandwidth, or the like) is fixedly performed. Therefore, in the plant management system 100-P, in some cases, it is difficult to cope with a situation in which a load on the entire system fluctuates. In particular, in the plant management system 100-P, when a plurality of applications are simultaneously operated, extra resources or insufficient used resources are likely to occur, so that efficiency of the system may decrease.

### 1-3-1-2. Application migration

In the plant management system 100-P, it is difficult to perform application migration between different kinds of hardware or different venders, and it is difficult to perform data migration or application re-allocation between incompatible systems. Further, in the plant management system 100-P, application re-allocation may be performed manually, so that it may take a long time to complete appropriate resource allocation.

### 1-3-1-3. Security management

In the plant management system 100-P, measures against data security is limited, and, in some cases, management of accesses to resources and applications is not sufficiently implemented. In particular, in the plant management system 100-P, it is difficult to ensure access control and traceability between different systems, and there are safety issues with the entire systems of various types.

### 1-3-2. Background of plant management system 100-P

In the plant management system 100-P according to the reference technology, many of interfaces have technical limitations or are not standardized, so that it is difficult to ensure compatibility between different venders. Further, in the plant management system 100-P, it is technically difficult to dynamically manage resources in real time, so that it is needed to depend on fixed resource allocation. Furthermore, in the plant management system 100-P, a security function in a system design is limited, so that it is common that sufficient security measures are not taken due to cost constraints or design constraints.

### 1-3-3. Problems with plant management system 100-P

The plant management system 100-P according to the reference technology have problems as described below. In the following, a first problem with a lack of dynamic resource management, a second problem with inefficiency of application migration, and a third problem with increase in security risks will be described.

### 1-3-3-1. First problem

Firstly, the plant management system 100-P has the first problem with a lack of dynamic resource management. Specifically, in the plant management system 100-P, a function to dynamically adjust resources is insufficient, and therefore, when a specific resource is overloaded, it is difficult to appropriately handle the situation. Consequently, in the plant management system 100-P, it is difficult to efficiently use resources, so that performance of the entire system may be degraded.

### 1-3-3-2. Second problem

Secondly, the plant management system 100-P has the second problem with inefficiency of application migration. Specifically, in the plant management system 100-P, it is difficult to perform application migration between different venders or different kinds of hardware. Therefore, in the plant management system 100-P, resources are not appropriately distributed during application migration, so that there is a risk of system down or performance degradation.

### 1-3-3-3. Third problem

Thirdly, the plant management system 100-P has the third problem with increase in security risks. Specifically, in the plant management system 100-P, it is difficult to sufficiently monitor and manage a resource usage status and an application migration status. Therefore, the plant management system 100-P has a risk of unauthorized access or data falsification. Further, in the plant management system 100-P, access control is not consistent between systems. Therefore, the plant management system 100-P has a problem with security.

### 1-3-4. Overview of plant management system 100

The plant management system 100 according to one embodiment performs processes as described below. Firstly, the management server 10 acquires a resource usage status that indicates the used resource of each of the controllers 30 at regular time intervals. Secondly, when the controllers 30 include the controller 30A that exceeds the size of the maximum resource, the management server 10 issues the transaction token corresponding to a size of the requested token that exceeds an upper limit of the token holding area in the held token of the controller 30A. Thirdly, the controller 30B that has an extra available resource among the controllers 30 accepts the transaction token that is issued by the management server 10, receives a control application that has the same size as the transaction token transmitted from the controller 30A and a held token that has the same size as the transaction token, and trades the available resource and the held token. Fourthly, the management server 10 registers the resource usage status, the resource trading history, and the token trading history of each of the controllers 30 in the blockchain that is stored in the blockchain database 20.

### 1-3-5. Background of plant management system 100

The plant management system 100 according to one embodiment is able to solve problems with dynamic resource management and application portability that are problems with an open process automation system. The plant management system 100-P according to the reference technology has a problem in that, even when the resource usage status fluctuates, it is difficult to sufficiently perform dynamic resource management, so that resource optimization is delayed and system efficiency decreases. In particular, in the plant management system 100-P, application migration between different venders and transparency and security of the resource usage status are insufficient. In contrast, in the plant management system 100, with use of a blockchain technology and a smart contract, resources in the system are automatically optimized. Therefore, in the plant management system 100, due to the automatic optimization as described above, efficiency of resource management in the entire system is largely enhanced, and flexible and safe operation is realized.

### 1-3-6. Effects of plant management system 100

The plant management system 100 according to one embodiment achieves effects as descried below. In the following, a first effect related to automatic optimization of dynamic resource management, a second effect related to seamless application migration, a third effect related to improvement in security and traceability, a fourth effect related to improvement in flexibility of the system, a fifth effect related to efficient resource forecasting and planning, and a sixth effect related to the entire system will be described.

### 1-3-6-1. First effect

Firstly, the plant management system 100 achieves the first effect related to automatic optimization of dynamic resource management. Specifically, in the plant management system 100, a resource usage status of the entire system is monitored in real time, and when resource overuse or resource shortage occurs, resource trading is automatically performed through a smart contract. Therefore, in the plant management system 100, performance of the entire system is maximized by an automatic optimization process and resources are not wasted, so that it is possible to implement proactive approach for improving efficiency of the resource management.

### 1-3-6-2. Second effect

Secondly, the plant management system 100 achieves the second effect related to seamless application migration. Specifically, the plant management system 100 is designed such that applications are smoothly migrated between different venders and different systems, so that even when a load on the system increases, application migration is automatically and efficiently performed. Further, in the plant management system 100, with use of a smart contract, application migration corresponding to the resource usage status is seamlessly performed, so that it is possible to minimize a down time of the system.

### 1-3-6-3. Third effect

Thirdly, the plant management system 100 achieves the third effect related to security and traceability. Specifically, the plant management system 100, with use of the blockchain technology, records and manages the resource usage status and the resource trading history (for example: application arrangement information) in an immutable mode. Therefore, in the plant management system 100, it is possible to establish a transparent resource management process and largely enhance security. In particular, in the plant management system 100, it is possible to improve traceability of the resource usage status and the resource trading history, so that it is possible to easily perform audit and troubleshooting.

### 1-3-6-4. Fourth effect

Fourthly, the plant management system 100 achieves the fourth effect related to improvement in flexibility of the system. Specifically, in the plant management system 100, dynamic resource allocation and optimization are automatically performed in an open industrial system in which different kinds of hardware and different kinds of software coexist. Therefore, in the plant management system 100, it is not needed to perform fixed resource allocation and it is possible to dramatically improve flexibility and operation efficiency of the entire system.

### 1-3-6-5. Fifth effect

Fifthly, the plant management system 100 achieves the fifth effect related to efficient resource forecasting and planning. Specifically, the plant management system 100 is able to forecast a future resource load based on a past resource usage status and a past resource trading history that are recorded in the blockchain. Therefore, in the plant management system 100, it is possible to establish an optimal system and make an optimal operation plan, so that it is possible to further improve efficiency of the resource management. In particular, in the plant management system 100, with the function to forecast resources and plans, it is possible to ensure long-term stability and long-term efficiency of the system.

### 1-3-6-6. Sixth effect

Sixthly, the plant management system 100 achieves the sixth effect related to the entire system. In the plant management system 100, it is possible to solve a problem with the open process automation system, in particular, it is possible to realize automatic resource optimization. In this case, in the plant management system 100, resources in the system are monitored in real time and resource allocation and application migration are automatically optimized, so that it is possible to dramatically improve efficiency and performance of the entire system. Further, in the plant management system 100, the automated process as described above largely improves flexibility, security, transparency, and the like of the system and enables sustainable and efficient operation. Specifically, in the plant management system 100, it is possible to provide an innovative technology for dynamic resource management and a basis for a future open system.

As described above, with use of the blockchain technology and a smart contract, the plant management system 100 optimizes the dynamic resource management and application migration in the open process automation system. In this case, the plant management system 100 is able to monitor and record the resource usage status in real time, enhance resource allocation and security, ensure portability, and improve efficiency and reliability of the entire system. In other words, in the plant management system 100, it is possible to optimize resource management of the system.

### 2. Configuration and process of each of apparatuses in plant management system 100

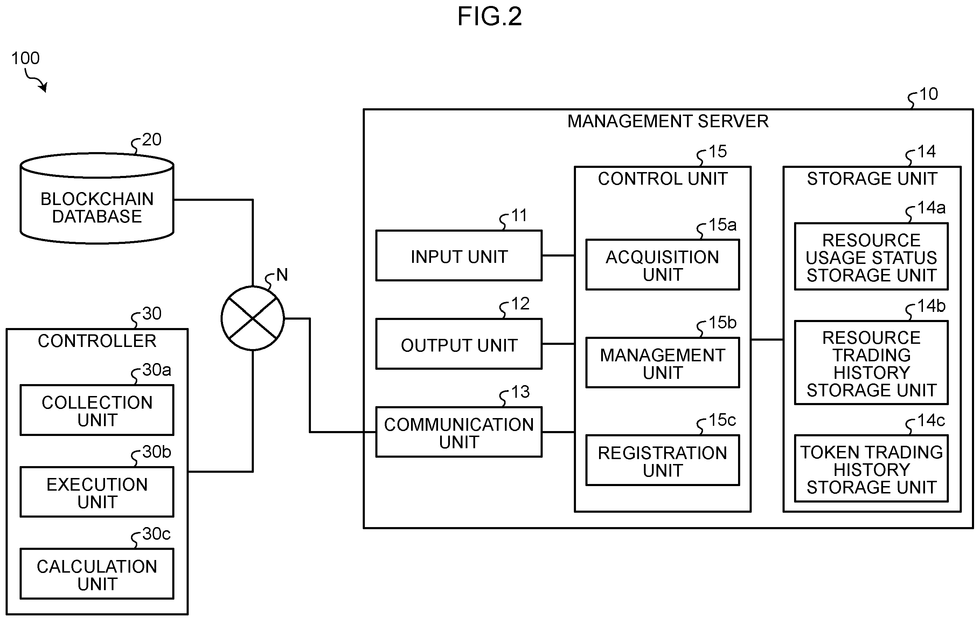

A configuration and a process of each of apparatuses that are included in the plant management system 100 illustrated in FIG. 1 will be described below with reference to FIG. 2 to FIG. 6. In the following, a configuration example of the entire plant management system 100 according to one embodiment, a configuration example and a process example of the management server 10, a configuration example and a process example of the blockchain database 20, and a configuration example and a process example of the controllers 30 will be described.

### 2-1. Configuration example of entire plant management system 100

A configuration example of the entire plant management system 100 illustrated in FIG. 1 will be described below with reference to FIG. 2. FIG. 2 is a block diagram illustrating a configuration example of each of the apparatuses of the plant management system 100 according to one embodiment. As illustrated in FIG. 2, the plant management system 100 includes the management server 10, the blockchain database 20, and the controllers 30. Further, the management server 10 is communicably connected via a communication network N that is implemented by the Internet, a dedicated line, or the like.

### 2-2. Configuration example and process example of management server 10

A configuration example and a process example of the management server 10 will be described with reference to FIG. 2. The management server 10 includes an input unit 11, an output unit 12, a communication unit 13, a storage unit 14, and a control unit 15.

### 2-2-1. Input unit 11

The input unit 11 controls input of various kinds of information to the management server 10. For example, the input unit 11 is implemented by a mouse, a keyboard, a touch panel, or the like, and receives input of various kinds of information to the management server 10.

### 2-2-2. Output unit 12

The output unit 12 controls output of various kinds of information from the management server 10. For example, the output unit 12 is implemented by a display, a speaker, or the like, and displays various kinds of information that are stored in the management server 10.

### 2-2-3. Communication unit 13

The communication unit 13 controls communication with a different apparatus. For example, the communication unit 13 performs data communication with each of communication apparatuses via a router or the like. Further, the communication unit 13 is able to perform data communication with a terminal or the like (not illustrated).

### 2-2-4. Storage unit 14

The storage unit 14 stores therein various kinds of information that are referred to when the control unit 15 operates, and various kinds of information that are acquired when the control unit 15 operates. The storage unit 14 includes a resource usage status storage unit 14a, a resource trading history storage unit 14b, and a token trading history storage unit 14c. Here, the storage unit 14 may be implemented by, for example, a semiconductor memory device such as a Random Access Memory (RAM) or a flash memory, or a storage device, such as a hard disk or an optical disk. Meanwhile, in the example illustrated in FIG. 2, the storage unit 14 is arranged inside the management server 10, but may be arranged outside the management server 10 or it may be possible to arrange a plurality of storage units.

### 2-2-4-1. Resource usage status storage unit 14a

The resource usage status storage unit 14a stores therein the resource usage status. For example, the resource usage status storage unit 14a stores therein the resource usage status that is acquired by an acquisition unit 15a of the control unit 15 (to be described later).

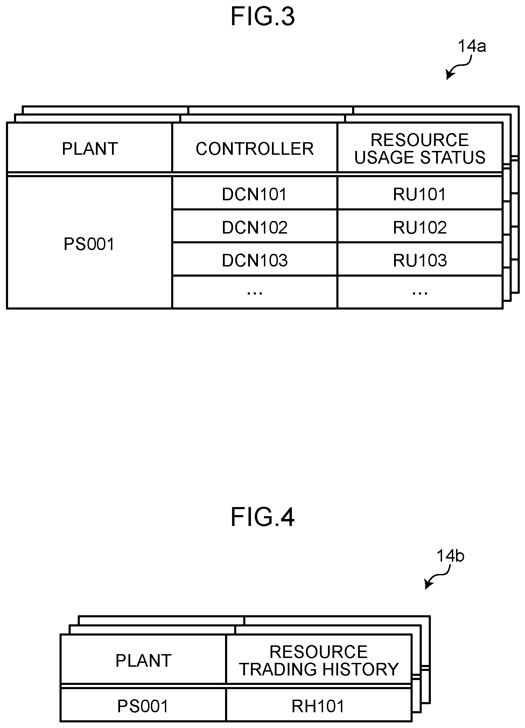

An example of data that is stored in the resource usage status storage unit 14a will be described below with reference to FIG. 3. FIG. 3 is a diagram illustrating an example of the resource usage status storage unit 14a of the management server 10 according to one embodiment. In the example illustrated in FIG. 3, the resource usage status storage unit 14a includes items such as a "plant", a "controller", and a "resource usage status".

The "plant" indicates identification information for identifying the plant PS that is a management target. For example, the "plant" is an identification number or an identification symbol of the plant PS in an open process automation system or an industrial control system. The "controller" indicates identification information for identifying the controller 30 that is included in the plant PS. For example, the "controller" is an identification number or an identification symbol of a DCN or the like that controls a communication device and a field device of each of processes and that is able to execute a smart contract. The "resource usage status" is information that indicates a temporal change of usage status of a used resource that is used by each of the controllers 30. For example, the "resource usage status" is information that indicates a usage status of the CPU, the memory, the network bandwidth, or the like of each of the controllers 30 at intervals of one second.

Specifically, FIG. 3 illustrates an example in which the resource usage status storage unit 14a stores therein, with respect to the plant PS that is identified by "PS001", {controller: "DCN101", resource usage status: "RU101"}, {controller: "DCN102", resource usage status: "RU102"}, {controller: "DCN103", resource usage status: "RU103"}, ....

### 2-2-4-2. Resource trading history storage unit 14b

The resource trading history storage unit 14b stores therein the resource trading history. For example, the resource trading history storage unit 14b stores therein the resource trading history that is acquired by the acquisition unit 15a of the control unit 15 (to be described later).

An example of data that is stored in the resource trading history storage unit 14b will be described below with reference to FIG. 4. FIG. 4 is a diagram illustrating an example of the resource trading history storage unit 14b of the management server 10 according to one embodiment. In the example illustrated in FIG. 4, the resource trading history storage unit 14b includes items such as a "plant" and a "resource trading history". Meanwhile, the item of the "plant" is the same as that included in the resource usage status storage unit 14a, and therefore, explanation thereof will be omitted.

The "resource trading history" is information that indicates a history of trading of a resource between the controllers 30. For example, the "resource trading history" is information that indicates addition, deletion, transmission, reception, or the like of a control application of each of the controllers 30 as one type of resource trading of each of the controllers 30. Further, the "resource trading history" may include, as resource allocation that is one type of resource trading of each of the controllers 30, information that indicates alternative execution of a process for temporarily allowing a different device to use a CPU area, a memory area, a network bandwidth, or the like of the subject device, or a process, such as data communication, that does not need the control application. Furthermore, the "resource trading history" may include information that indicates a size of the maximum resource that is a maximum size of the available resource that is available to each of the controllers 30.

Specifically, FIG. 4 illustrates an example in which the resource trading history storage unit 14b stores therein, with respect to the plant PS that is identified by "PS001", {resource trading history: "RH101"}.

### 2-2-4-3. Token trading history storage unit 14c

The token trading history storage unit 14c stores therein the token trading history. For example, the token trading history storage unit 14c stores therein the token trading history that is acquired by the acquisition unit 15a of the control unit 15 (to be described later).

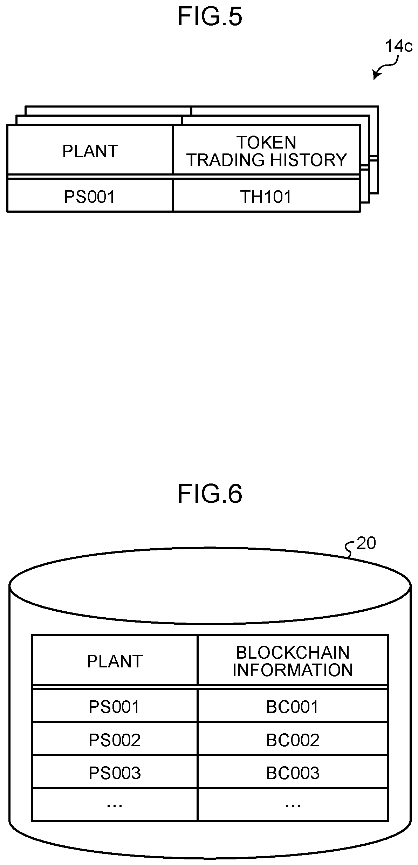

An example of data that is stored in the token trading history storage unit 14c will be described below with reference to FIG. 5. FIG. 5 is a diagram illustrating an example of the token trading history storage unit 14c of the management server 10 according to one embodiment. In the example illustrated in FIG. 5, the token trading history storage unit 14c includes items such as a "plant" and a "token trading history". Meanwhile, the item of the "plant" is the same as that included in the resource usage status storage unit 14a, and therefore, explanation thereof will be omitted.

The "token trading history" is information that indicates a history of trading of a token between the controllers 30. For example, the "token trading history" is information that indicates, as trading of a token by each of the controllers 30, a size of the held token that is issued for each of the controllers 30, a change of the size of the held token, a size and a transmission-reception history of a held token that is traded between the controllers 30, a history of a transaction token issuance request, a history of acceptance of the transaction token, a history of deletion of the transaction token, or the like. Further, the "token trading history" may include a transaction token that is issued by a management unit 15b of the control unit 15 (to be described later) and that can be referred to by each of the controllers 30. Furthermore, the "token trading history" may include information that indicates a size of the token holding area as a maximum size of the held token that is held by each of the controllers 30.

Specifically, FIG. 5 illustrates an example in which the token trading history storage unit 14c stores therein, with respect to the plant PS that is identified by "PS001", {token trading history: "TH101"}.

### 2-2-5. Control unit 15

The control unit 15 controls the entire management server 10. The control unit 15 includes the acquisition unit 15a, the management unit 15b, and a registration unit 15c. Here, the control unit 15 may be implemented by, for example, an electronic circuit, such as a CPU or a Micro Processing Unit (MPU), or an integrated circuit, such as an Application Specific Integrated Circuit (ASIC) or a Field Programmable Gate Array (FPGA).

### 2-2-5-1. Acquisition unit 15a

The acquisition unit 15a acquires various kinds of information. Meanwhile, the acquisition unit 15a stores various kinds of acquired information in the storage unit 14. In the following, a resource usage status acquisition control process, a resource trading history acquisition control process, and a token trading history acquisition control process will be described.

### Resource usage status acquisition control process

The acquisition unit 15a performs the resource usage status acquisition control process. For example, the acquisition unit 15a acquires resource usage statuses that are collected by a plurality of devices. Further, the acquisition unit 15a acquires resource usage statuses that are collected by the plurality of controllers 30.

A specific example of the resource usage status acquisition control process will be described. Firstly, the acquisition unit 15a acquires, with respect to the plant PS that is identified by "PS001", "RU101" as a resource usage status from the controller 30-1 that is identified by "DCN101", "RU102" as a resource usage status from the controller 30-2 that is identified by "DCN102", and "RU103" as a resource usage status from the controller 30-3 that is identified by "DCN103". Secondly, the acquisition unit 15a stores the acquired resource usage statuses in the resource usage status storage unit 14a.

### Resource trading history acquisition control process

The acquisition unit 15a performs the resource trading history acquisition control process. For example, the acquisition unit 15a acquires a resource trading history that indicates a history of trading of a resource by a plurality of devices. Further, the acquisition unit 15a acquires a resource trading history that indicates a history of trading of a resource by the plurality of controllers 30.

A specific example of the resource trading history acquisition control process will be described. Firstly, the acquisition unit 15a acquires, with respect to the plant PS that is identified by "PS001", "RH001" as the resource trading history from each of the controllers 30. Secondly, the acquisition unit 15a stores the acquired resource trading history in the resource trading history storage unit 14b.

### Token trading history acquisition control process

The acquisition unit 15a performs the token trading history acquisition control process. For example, the acquisition unit 15a acquires a token trading history that indicates a history of trading of a token by a plurality of devices. Further, the acquisition unit 15a acquires a token trading history that indicates a history of trading of a token by the plurality of controllers 30. Furthermore, when the requested resource is traded between the controller 30B that has acquired the transaction token and the controller 30A, the acquisition unit 15a acquires a token trading history of transmission of a held token, which is a second token corresponding to the size of the transaction token, from the controller 30A to the controller 30B. Here, the size of the held token may be the same as the size of the transaction token, or may be a size that is proportional to the size of the transaction token.

A specific example of the token trading history acquisition control process will be described. Firstly, the acquisition unit 15a acquires, with respect to the plant PS that is identified by "PS001", "TH001" as the token trading history from each of the controllers 30. Secondly, the acquisition unit 15a stores the acquired token trading history in the token trading history storage unit 14c.

### 2-2-5-2. Management unit 15b

The management unit 15b manages various kinds of information. Meanwhile, the management unit 15b may store various kinds of output information in the storage unit 14. Further, the management unit 15b may refer to various kinds of information that are stored in the storage unit 14. In the following, a token issuance control process, a token additional issuance control process, and a token deletion control process will be described.

### Token issuance control process

The management unit 15b performs the token issuance control process. For example, the management unit 15b issues a held token that is held by each of the controllers 30 that are included in the system, such as an open process automation system. Further, when the controller 30 is newly installed in the system, the management unit 15b issues a held token. Furthermore, the management unit 15b transmits the held token to the newly installed controller 30.

A specific example of the token issuance control process will be described. Firstly, the management unit 15b detects a new connection of a controller 30-4 in the open process automation system. Secondly, the management unit 15b issues a held token "HT101". Thirdly, the management unit 15b transmits the held token "HT101" to the controller 30-4.

### Token additional issuance control process

The management unit 15b performs the token additional issuance control process. For example, the management unit 15b issues a transaction token that is the first token corresponding to a size of a requested resource that is requested by the controller 30A serving as the first device among the plurality of controllers 30 that are included in the system, such as the open process automation system. Further, when receiving a transaction token issuance request from the controller 30A, the management unit 15b issues a transaction token. Furthermore, the management unit 15b may issue a transaction token when detecting a lack of a resource of the controller 30A based on the resource usage status that is acquired from the controller 30A. Moreover, the management unit 15b stores the transaction token in a storage area that can be referred to by the controller 30B serving as the second device that is able to provide the requested resource. For example, the management unit 15b stores the transaction token in the token trading history storage unit 14c as the storage area that can be referred to by each of the controllers 30. Furthermore, when the controller 30B that is able to independently acquire the transaction token in the system is not present, the management unit 15b divides the transaction token. In this case, the management unit 15b adds a transaction token corresponding to an installment fee to the divided transaction token.

A specific example of the token additional issuance control process will be described. Firstly, the management unit 15b receives a transaction token issuance request "IA101" corresponding to the size of the requested resource from the controller 30-1. Secondly, the management unit 15b issues a transaction token "TT101". Thirdly, the management unit 15b stores the issued transaction token "TT101" in the token trading history storage unit 14c. Fourthly, the management unit 15b receives a transaction token acceptance request "TA102" from the controller 30-2, and receives a transaction token acceptance request "TA103" from the controller 30-3. Fifthly, the management unit 15b refers to the resource usage status "RU102" of the controller 30-2 and the resource usage status "RU103" of the controller 30-3 that are stored in the resource usage status storage unit 14a. Sixthly, the management unit 15b identifies that the controller 30-3 has an extra available resource as compared to the controller 30-2 based on the resource usage statuses that are referred to. Seventhly, the management unit 15b selects the controller 30-3 as an acceptance destination of the transaction token "TT101", and performs setting such that only the controller 30-3 can access the transaction token "TT101".

### Token deletion control process

The management unit 15b performs the token deletion control process. For example, the management unit 15b deletes the transaction token that has been transmitted from the controller 30B and that is no longer needed. Further, the management unit 15b may delete the held token that has been transmitted from the controller 30 and that is no longer needed.

A specific example of the token deletion control process will be described. Firstly, the management unit 15b receives the transaction token "TT101" that is no longer needed from the controller 30-3 that has completed trading. Secondly, the management unit 15b deletes the received transaction token "TT101". Thirdly, the management unit 15b receives a held token "HT104" that is no longer needed from the controller 30-4 that has completed operation. Fourthly, the management unit 15b deletes the received held token "HT104".

### 2-2-5-3. Registration unit 15c

The registration unit 15c registers various kinds of information. Meanwhile, the registration unit 15c may refer to various kinds of information that are stored in the storage unit 14. In the following, a resource usage status registration control process, a resource trading history registration control process, and a token trading history registration control process will be described.

### Resource usage status registration control process

The registration unit 15c performs the resource usage status registration control process. For example, the registration unit 15c registers a resource usage status that is monitored by each of the controllers 30 and that is a usage status of the used resource used by each of the controllers 30, in a distributed ledger that can be shared by users of the system, such as an open process automation system. Here, a user of the system include an operator, an engineer, a worker, or the like of each of plants in the open process automation system or the like, and staff in a remote place (for example, a head office of a company that owns each of the plants) that is distant from each of the plants, or the like. In this case, the registration unit 15c registers the resource usage status as a distributed ledger in a blockchain.

A specific example of the resource usage status registration control process will be described. Firstly, the registration unit 15c refers to, with respect to the plant PS that is identified by "PS001", "RU101", "RU102", "RU103", ... as resource usage statuses that are stored in the resource usage status storage unit 14a. Secondly, the registration unit 15c registers, with respect to the plant PS that is identified by "PS001", the resource usage statuses that are referred to in "BC001" as blockchain information that is stored in the blockchain database 20.

### Resource trading history registration control process

The registration unit 15c performs the resource trading history registration control process. For example, the registration unit 15c registers a resource trading history of trading of a resource, which is available to each of the controllers 30, among the plurality of controllers 30, in the distributed ledger that can be shared by users of the system, such as the open process automation system. In this case, the registration unit 15c registers the resource trading history as the distributed ledger in a blockchain.

A specific example of the resource trading history registration control process will be described. Firstly, the registration unit 15c refers to, with respect to the plant PS that is identified by "PS001", "RH001" as the resource trading history that is stored in the resource trading history storage unit 14b. Secondly, the registration unit 15c registers, with respect to the plant PS that is identified by "PS001", the resource trading history that is referred to in "BC001" as the blockchain information that is stored in the blockchain database 20.

Token trading history registration control process

The registration unit 15c performs the token trading history registration control process. For example, when the requested resource is traded between the controller 30B that has acquired the transaction token and the controller 30A, the registration unit 15c registers the token trading history that is acquired by the acquisition unit 15a in a distributed ledger that can be shared by users of the system, such as the open process automation system. In this case, the registration unit 15c registers the token trading history as a distributed ledger in a blockchain.

A specific example of the token trading history registration control process will be described. Firstly, the registration unit 15c refers to, with respect to the plant PS that is identified by "PS001", "TH001" as the token trading history that is stored in the token trading history storage unit 14c. Secondly, the registration unit 15c registers, with respect to the plant PS that is identified by "PS001", the token trading history that is referred to in "BC001" as the blockchain information that is stored in the blockchain database 20.

### 2-3. Configuration example and process example of blockchain database 20

A configuration example and a process example of the blockchain database 20 will be described below with reference to FIG. 6. FIG. 6 is a diagram illustrating an example of the blockchain database 20 according to one embodiment. In the example illustrated in FIG. 6, the blockchain database 20 includes items such as a "plant" and "blockchain information". Meanwhile, the item of the "plant" is the same as that included in the resource usage status storage unit 14a, and therefore, explanation thereof will be omitted.

The "blockchain information" indicates information indicating that various kinds of information on the controller 30 are registered as the distributed ledger in the blockchain. For example, the "blockchain information" is blockchain data in which the resource usage status, the resource trading history, the token trading history, and the like of the controller 30 are registered for each of the plants PS.

Specifically, FIG. 6 illustrates an example in which the blockchain database 20 stores therein {plant: "PS001", blockchain information : "BC001"}, {plant: "PS002", blockchain information : "BC002"}, {plant: "PS003", blockchain information : "BC003"}, ....

### 2-4. Configuration example and process example of controller 30

A configuration example and a process example of the controller 30 will be described below with reference to FIG. 2. For example, the controller 30 is a plant device that is included in the plant PS and controls a control device, a field device, or the like of each of processes. Further, the controller 30 has a token holding area corresponding to the maximum size of the available resource that is available to the controller 30. Further, the controller 30 is implemented by a DCN or the like that is able to execute a smart contract. Here, the "smart contract" is a program that automatically executes a predetermined process when a predetermined condition is met, and is a program that executes overall contract logic. Furthermore, the available resource is an available area of a CPU, a memory, or a network bandwidth. Moreover, the controller 30 includes a collection unit 30a, an execution unit 30b, and a calculation unit 30c.

### 2-4-1. Collection unit 30a

The collection unit 30a collects various kinds of information. For example, the collection unit 30a collects a resource usage status that is a usage status of the CPU, the memory, the network bandwidth, or the like used by the subject device, at intervals of one second. Further, the collection unit 30a transmits the collected resource usage status to the management server 10.

### 2-4-2. Execution unit 30b

The execution unit 30b performs various kinds of processes. For example, when the size of the held token that is held by the subject device exceeds an upper limit of the token holding area, the execution unit 30b transmits a transaction token issuance request to the management server 10. Further, in the case of the controller 30B that is able to provide the requested resource, the execution unit 30b acquires the transaction token that is stored in the storage area that can be referred to. Furthermore, the execution unit 30b receives a held token from the different controller 30 until the size of the held token that is held by the subject device reaches the upper limit of the token holding area. Moreover, the execution unit 30b trades the requested resource by migrating an application corresponding to the size of the requested resource from the subject device to a different device. Furthermore, the execution unit 30b is able to perform a process of temporarily allowing the different device to use an available area of the CPU, the memory, the network bandwidth, or the like of the subject device, or trading a requested resource by performing an alternative execution process for a process, such as data communication, that does not need a control application. Moreover, the execution unit 30b performs trading of an available resource and trading of a held token that is held by each of the device by a smart contract engine.

### 2-4-3. Calculation unit 30c

The calculation unit 30c calculates various kinds of information. For example, the calculation unit 30c executes a control application and calculates a calculated value that is needed to control a communication device or a field device.

### 3. Specific example of each of processes of plant management system 100

A specific example of each of processes of the plant management system 100 according to one embodiment will be described below. In the following, a specific example of the entire plant management system 100, a specific example of various kinds of algorithms of the plant management system 100, a specific example of resource management by the plant management system 100, an application example of the plant management system 100, and a practical example of the plant management system 100 will be described.

### 3-1. Specific example of entire plant management system

A specific example of the entire plant management system 100 will be described. In the following, a specific example of an overall configuration of the plant management system 100, a specific example of various components of the plant management system 100, a specific example of each of processes of the plant management system 100, and a specific example of various kinds of effects of the plant management system 100 will be described.

### 3-1-1. Specific example of overall configuration of plant management system 100

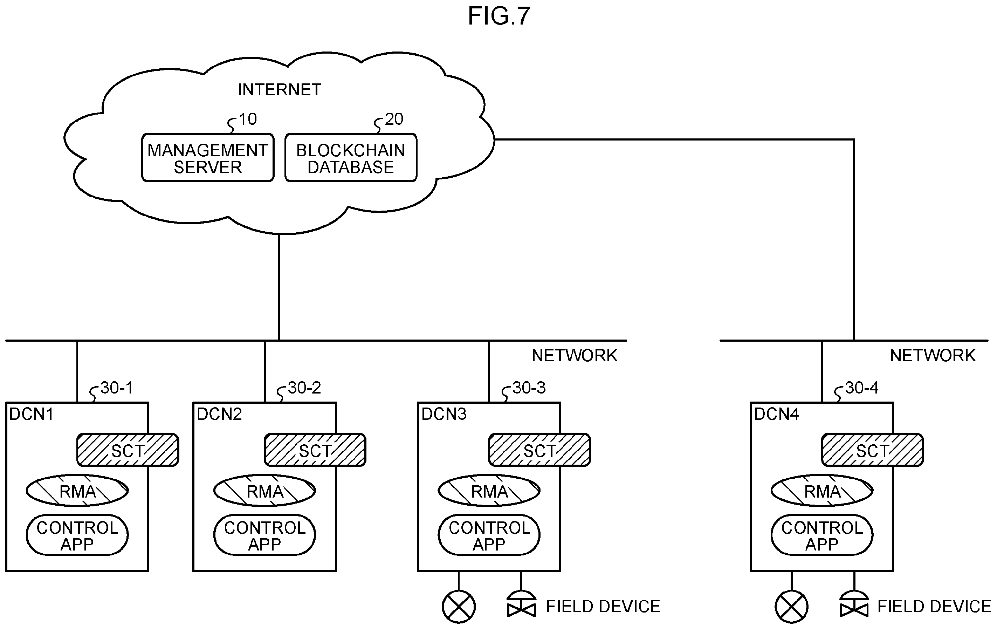

A specific example of the overall configuration of the plant management system 100 will be described below with reference to FIG. 7. FIG. 7 is a diagram illustrating a specific example of the overall configuration of the plant management system 100. In the example illustrated in FIG. 7, the plant management system 100 includes the management server 10, the blockchain database 20, and the controllers 30 (30-1, 30-2, 30-3, 30-4). Here, the management server 10 and the blockchain database 20 are installed in an Internet environment. Further, "DCN1" that is the controller 30-1, "DCN2" that is the controller 30-2, "DCN3" that is the controller 30-3, and "DCN4" that is the controller 30-4 are connected to the management server 10 and the blockchain database 20, which are in the Internet environment, by a network. Furthermore, each of the controller 30-1, the controller 30-2, the controller 30-3, and the controller 30-4 includes "SCT" that is a smart contract engine, "RMA" that is a resource monitoring agent, and a "control APP" that is a control application. Moreover, the controller 30-3 and the controller 30-4 are connected to field devices.

### 3-1-2. Specific example of various components of plant management system 100

A specific example of various components of the plant management system 100 will be described. In the following, the resource monitoring agent, the blockchain database 20, the smart contract engine, and the management server 10 will be described.

### 3-1-2-1. Resource monitoring agent

The resource monitoring is arranged in each of the controllers 30 and monitors a resource usage status of the CPU, the memory, the network bandwidth, or the like in real time. The resource monitoring agent continuously collects the resource usage status and transmits the resource usage status to the blockchain database 20 via the management server 10.

### 3-1-2-2. Blockchain database 20

The blockchain database 20 is a distributed ledger that manages the resource usage status, which is transmitted from the resource monitoring agent, in an immutable mode. The blockchain database 20 stores therein the resource usage status that is shared by the controllers 30. Therefore, in the plant management system 100, it is possible to ensure transparency and reliability of the entire open process automation system.

Meanwhile, the blockchain database 20 is one example of the distributed ledger and is not limited to the blockchain. For example, the plant management system 100 may be implemented by using a distributed ledger technology, such as Directed Acyclic Graph (DAG) or a Hashgraph.

### 3-1-2-3. Smart contract engine

The smart contract engine is arranged in each of the controllers 30 and automates token trading among the controllers 30. For example, the smart contract engine moves a token in accordance with a resource request status or a resource providing status, and distributes loads. Further, the smart contract engine monitors a resource usage rate in each of the controllers 30, and exchanges a token based on the resource usage rate. Furthermore, the smart contract engine automatically adjusts excess and deficiency of tokens and manages resource trading.

### 3-1-2-4. Management server 10

The management server 10 issues or deletes a token that is associated with a resource when each of the controllers 30 requests or provides the resource. For example, the management server 10 is established in an edge environment or a cloud environment, and manages token trading corresponding to resource trading. Further, the management server 10 is able to visualize resource trading of each of the controllers 30 based on token issuance and token deletion. In this case, the controller 30A that lacks a resource transmits a token and receives the insufficient resource from the controller 30B. Furthermore, the controller 30B that provides an extra resource receives the token and provides the extra resource to the controller 30A.

### 3-1-3. Specific example of each of processes of plant management system 100

A specific example of each of processes of the plant management system 100 will be described. In the following, resource monitoring and data collection, activation of smart contract, resource trading, and optimization of entire system will be described.

### 3-1-3-1. Resource monitoring and data collection

The resource monitoring agent monitors the resource usage status (for example: a CPU, a memory, a network bandwidth, or the like) at intervals of one second, and transmits the resource usage status to the blockchain database 20 via the management server 10. In this case, in the plant management system 100, the resource usage status of each of the controllers 30 is tokenized in real time.

### 3-1-3-2. Activation of smart contract

The smart contract engine automatically activates a smart contract when a predetermined condition is met, based on the resource usage status that is registered in the blockchain. For example, when a CPU usage rate exceeds 80%, the smart contract engine starts to perform a process for application migration or resource distribution.

### 3-1-3-3. Resource trading

The smart contract engine migrates an application from the controller 30A on which an excessive load is applied to the controller 30B that has an extra available resource, in accordance with the resource usage status (application migration). Further, the smart contract engine performs various kinds of processes of the controller 30A by using the CPU, the memory, the network bandwidth, or the like of the controller 30B in accordance with the resource usage status (resource distribution). Therefore, in the plant management system 100, it is possible to prevent a lack of resources or overload on the system.

### 3-1-3-4. Optimization of entire system

In the plant management system 100, the resource usage status is always registered in the blockchain and resource allocation is dynamically optimized through a smart contract, so that performance of the entire open process automation system is maximized.

### 3-1-4. Specific examples of various kinds of effects of plant management system 100

Specific examples of various kinds of effects of the plant management system 100 will be described. In the following, real-time automatic resource optimization, application portability, improvement in security and transparency, and system flexibility will be described.

### 3-1-4-1. Real-time automatic resource optimization

In the plant management system 100, it is possible to optimize the resource usage status in each of the controllers 30 in real time by combining resource monitoring and a smart contract. Therefore, in the plant management system 100, it is possible to maximize the efficiency of the open process automation system and automate load distribution.

### 3-1-4-2. Application portability

In the plant management system 100, it is possible to seamlessly perform application migration between the different controllers 30, so that it is possible to minimize a downtime. Therefore, in the plant management system 100, it is possible to improve availability of the open process automation system.

### 3-1-4-3. Improvement in security and transparency

In the plant management system 100, the resource usage status and the resource trading history are registered in an immutable mode by a blockchain, so that it is possible to enhance security of the entire open process automation system. Further, in the plant management system 100, it is possible to ensure transparency of the history information, so that it is possible to easily perform audit and trouble shooting.

### 3-1-4-4. System flexibility

The plant management system 100 has a function to migrate an application to the different controller 30 when a resource is insufficient, so that it is possible to eliminate bias of resources in the entire open process automation system. Therefore, in the plant management system 100, it is possible to improve flexibility of the open process automation system and dynamically adjust resources.

### 3-2. Specific examples of various kinds of algorithms of plant management system 100

Specific examples of various kinds of algorithms of the plant management system 100 will be described. In the following, as algorithms of resource trading, algorithm constraints, an objective function of an algorithm, a process of an algorithm, and output of an algorithm will be described.

### 3-2-1. Algorithm constraints

Algorithm constraints will be described as an algorithm for resource trading. In the following, accuracy of real-time monitoring, efficiency of data processing, secure data management in the blockchain, fair resource trading with a token, and emergency response to resource shortage will be described.

### 3-2-1-1. Accuracy of real-time monitoring

In the plant management system 100, it is needed to monitor a resource without delay and accurately recognize the resource usage status of the CPU, the memory, the network bandwidth, or the like of each of the controllers 30 in real time. Therefore, in the plant management system 100, it is possible to provide a quick response and detect excessive use of a resource or resource shortage.

### 3-2-1-2. Efficiency of data processing

In the plant management system 100, it is needed to perform compression and effective transfer with respect to the resource usage status that is collected from each of the controllers 30, and it is important not to increase a load on the entire system. In this case, in the plant management system 100, it is needed to appropriately and collectively transmit data to prevent occurrence of excessive overhead.

### 3-2-1-3. Secure data management in blockchain

In the plant management system 100, it is needed to consistently manage the resource usage statuses in an immutable blockchain, and maintain common accesses and synchronization with respect to data among all of the controllers 30. Therefore, in the plant management system 100, it is possible to ensure consistency of data and improve reliability of the data.

### 3-2-1-4. Fair resource trading with token

In the plant management system 100, it is needed to fairly and efficiently perform resource trading with a token. Further, in the plant management system 100, it is needed to appropriately automate resource trading and equally distribute loads between the controller 30A that has issued a request for a resource and the controller 30B that provides the resource.

### 3-2-1-5. Emergency response to resource shortage

In the plant management system 100, when a resource of the controller 30A is insufficient, it is needed to immediately cause the controller 30B to provide the resource.

### 3-2-2. Objective function of algorithm

As an algorithm of resource trading, an objective function of the algorithm will be described. In the following, maximization of resource usage efficiency, equalization of load distribution, improvement in performance of the entire system, and enhancement and transparency and security of the resource usage status will be described.

### 3-2-2-1. Maximization of resource usage efficiency

In the plant management system 100, an object is to optimize the resource usage status of each of the controllers 30 in real time and adjust excess or deficiency of resources among the controllers 30. In this case, the plant management system 100 eliminates a waste of resources and optimizes the resource usage status of the entire system.

### 3-2-2-2. Equalization of load distribution

In the plant management system 100, an object is to prevent excessive use of resources and distribute used resources so as to prevent load concentration on the specific controller 30. In this case, the plant management system 100 performs token trading based on a smart contract and fairly performs resource trading among the controllers 30.

### 3-2-2-3. Improvement in performance of the entire system

In the plant management system 100, an object is to perform optimal resource allocation based on the resource usage statuses of the controllers 30 and improve entire performance. Therefore, the plant management system 100 improve a processing speed or throughput of an application and increase system security.

### 3-2-2-4. Enhancement and transparency and security of resource usage status

In the plant management system 100, an object is to record the resource usage status in an immutable mode by a blockchain and allow all of the controllers 30 to share the recorded data in a reliable mode. Therefore, in the plant management system 100, it is possible to ensure transparency and security of the system.

### 3-2-3. Process of algorithm

As the algorithm of resource trading, a process of an algorithm will be described. In the following, real-time monitoring of resources, automation of token issuance and token trading, equalization of load distribution, recording and traceability of the resource usage status, and emergency response to resource shortage will be described.

### 3-2-3-1. Real-time monitoring of resources

In the plant management system 100, the resource monitoring agent monitors the resource usage status of the CPU, the memory, the network bandwidth, or the like of each of the controllers 30 at intervals of one second, and transmits the collected resource usage statuses to the management server 10.

### 3-2-3-2. Automation of token issuance and token trading

In the plant management system 100, the smart contract engine automatically manages a token issuance process and a token deletion process when each of the controllers 30 requests or provides a resource. In this case, in the plant management system 100, the controller 30A in which a resource is insufficient receives a resource by using a token, and the controller 30B that has provided the resource receives the token.

### 3-2-3-3. Equalization of load distribution

In the plant management system 100, the smart contract engine analyzes the resource usage status of each of the controllers 30 and causes the controller 30B that has an extra resource to provide the resource to the controller 30A that is overloaded. With this configuration, loads are equally distributed and performance of the entire system is improved.

### 3-2-3-4. Recording and traceability of resource usage status

In the plant management system 100, the blockchain database 20 records therein the resource trading history and the token trading history of each of the controllers 30 in an immutable mode. Therefore, in the plant management system 100, it is possible to ensure transparency and reliability of the system.

### 3-2-3-5. Emergency response to resource shortage

In the plant management system 100, when the controller 30A in which a resource is insufficient, it is possible to eliminate resource shortage by receiving a resource from the different controller 30B based on token trading or by migrating an application if needed.

### 3-2-4. Output of algorithm

As the algorithm of resource trading, output of an algorithm will be described. In the following, automatically optimized resource allocation, a token trading history, improvement in performance of the entire system, and traceability and an audit log will be described.

### 3-2-4-1. Automatically optimized resource allocation

In the plant management system 100, excessive use of a resource and resource shortage are automatically adjusted, and resource allocation that is optimized among the controllers 30 is realized.

### 3-2-4-2. Token trading history

In the plant management system 100, the token trading history is recorded among the controllers 30, and which of the controllers 30 has requested or provided a resource and the amount of the resource are made transparent.

### 3-2-4-3. Improvement in performance of entire system

In the plant management system 100, loads are equally distributed and resources are optimized, so that performance of the entire system is improved.

### 3-2-4-4. Traceability and an audit log

In the plant management system 100, with the resource trading history that is recorded in the blockchain, all of resource trading in the system becomes traceable, so that it is possible to easily perform audit and troubleshooting.

### 3-3. Specific example of resource management by plant management system 100

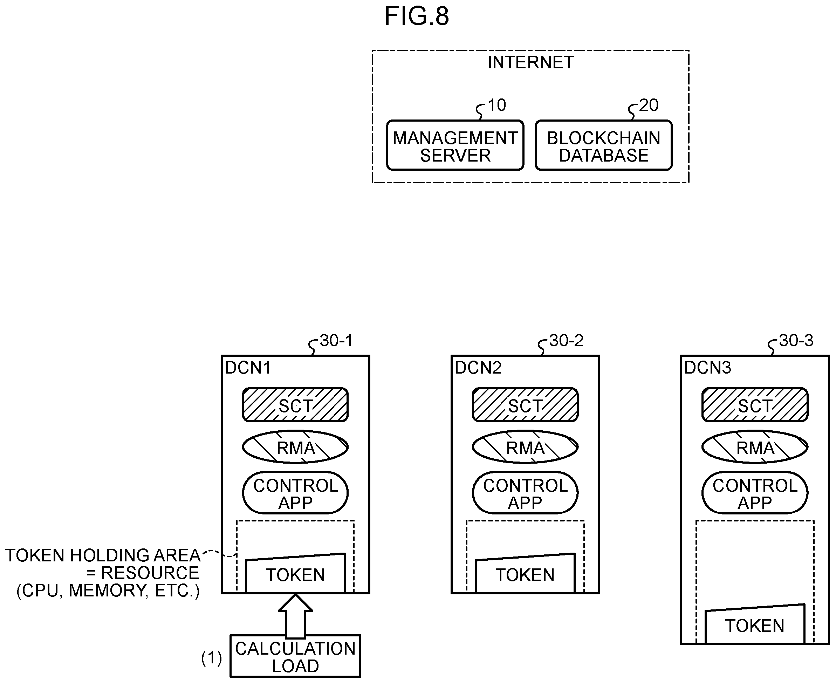

Specific examples of the resource management of the plant management system 100 will be described with reference to FIG. 8 to FIG. 12. In the following, a base state, load increase, transaction token issuance, transaction token acceptance, and distributed ledger update will be described as a plurality of stages of the resource management of the plant management system 100, and thereafter, effects of the resource management of the plant management system 100 will be described.

### 3-3-1. Base state

A specific example of the base state in the resource management of the plant management system 100 will be described below with reference to FIG. 8. FIG. 8 is a diagram illustrating a specific example of the base state in the resource management of the plant management system 100. In the example illustrated in FIG. 8, the plant management system 100 includes the management server 10, the blockchain database 20, and the controllers 30 (30-1, 30-2, 30-3). The management server 10 and the blockchain database 20 are installed in the Internet environment (dash-dotted line). Further, "DCN1" that is the controller 30-1, "DCN2" that is the controller 30-2, and "DCN3" that is the controller 30-3 are connected to the management server 10 and the blockchain database 20, which are in the Internet environment, by a network. Furthermore, each of the controller 30-1, the controller 30-2, and the controller 30-3 includes "SCT" that is a smart contract engine, "RMA" that is a resource monitoring agent, and a "control APP" that is a control application.

Moreover, as illustrated in the example in FIG. 8, each of the controllers 30 has a token holding area (dashed line) corresponding to an upper limit size of a resource. In the example illustrated in FIG. 8, the controller 30-1 and the controller 30-2 have the token holding areas with the same sizes. Furthermore, the controller 30-3 has the token holding area with a larger size than the controller 30-1 and the controller 30-2. Specifically, the size of the maximum resource of the controller 30-3 is larger than those of the controller 30-1 and the controller 30-2.

Moreover, as illustrated in the example in FIG. 8, each of the controllers 30 has a held token corresponding to a usage size of a resource. In the example illustrated in FIG. 8, the controller 30-1, the controller 30-2, and the controller 30-3 have held tokens with the same sizes. Specifically, the controller 30-1, the controller 30-2, and the controller 30-3 use resources with the same sizes. As illustrated in FIG. 8(1), when a calculation load increases, the size of the held token increases in accordance with the calculation load. In contrast, when the calculation load decreases, the size of the held token decreases.

### 3-3-2. Load increase

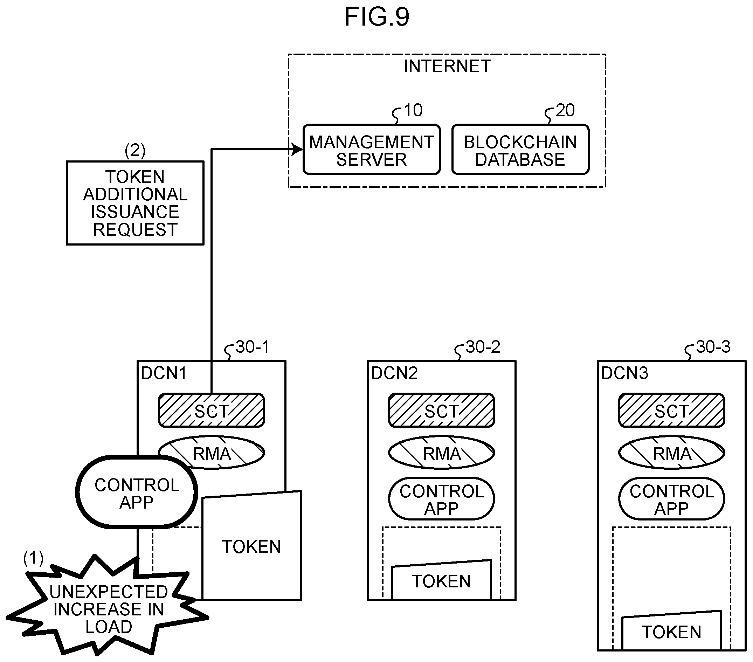

A specific example of the load increase in the resource management of the plant management system 100 will be described below with reference to FIG. 9. FIG. 9 is a diagram illustrating a specific example of the load increase in the resource management of the plant management system 100. As illustrated in FIG. 9(1), when the calculation load unexpectedly increases in the controller 30-1, the size of the held token of the controller 30-1 increases in accordance with the calculation load. In the example illustrated in FIG. 9(1), the size of the held token of the controller 30-1 increases about three times in accordance with the calculation load, and exceeds the token holding area of the controller 30-1.

As illustrated in FIG. 9(2), when the held token exceeds the token holding area due to the unexpected increase in the calculation load, the controller 30-1 issues a token additional issuance request to the management server 10. In this case, the controller 30-1 requests the management server 10 to issue a transaction token corresponding to an excess size via the smart contract engine.

In this case, the management server 10 is able to detect that the held token of the controller 30-1 exceeds the token holding area due to the unexpected increase in the calculation load, based on the resource usage status that is transmitted from the resource monitoring agent of the controller 30-1.

### 3-3-3. Traded token issuance

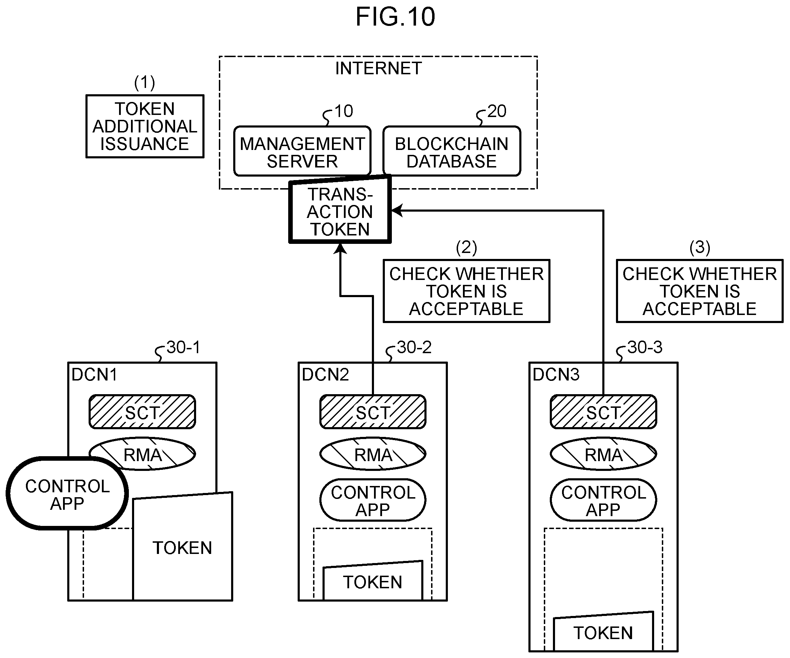

A specific example of the transaction token issuance in the resource management of the plant management system 100 will be described with reference to FIG. 10. FIG. 10 is a diagram illustrating a specific example of the transaction token issuance in the resource management of the plant management system 100. As illustrated in FIG. 10(1), when acquiring token additional issuance request from the controller 30-1, the management server 10 issues the transaction token corresponding to the excess size. As illustrated in FIG. 10(2), the controller 30-2 checks whether it is possible to accept the issued transaction token, that is, whether there is an extra available resource corresponding to the size of the transaction token. As illustrated in FIG. 10(3), the controller 30-3 checks whether it is possible to accept the issued transaction token, that is, whether there is an extra available resource corresponding to the size of the transaction token.

### 3-3-4. Traded token acceptance

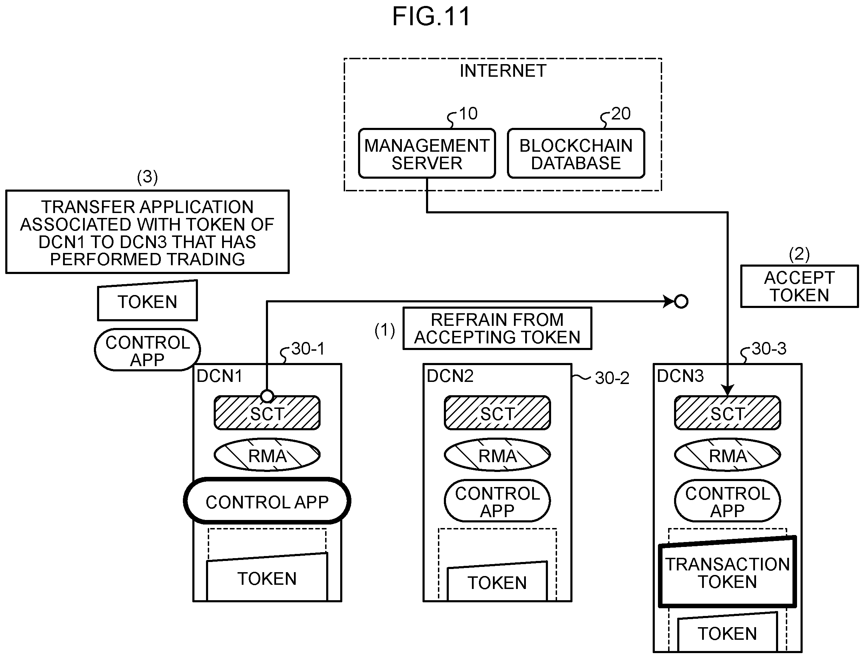

A specific example of the transaction token acceptance in the resource management of the plant management system 100 will be described with reference to FIG. 11. FIG. 11 is a diagram illustrating a specific example of the transaction token acceptance in the resource management of the plant management system 100. As illustrated in FIG. 11(1), if the controller 30-2 accepts the issued transaction token, the token holding area of the controller 30-2 is exceeded, so that the controller 30-2 refrains from accepting the transaction token. In contrast, as illustrated in FIG. 11(2), even if the controller 30-3 accepts the issued transaction token, the token holding area of the controller 30-3 is not exceeded, so that the controller 30-3 accepts the transaction token. In this case, the controller 30-3 accepts the transaction token from the management server 10 via the smart contract engine. Furthermore, as illustrated in FIG. 11(3), the controller 30-1 transmits a control application corresponding to a size exceeding the maximum resource, that is, the size of the requested resource, and a held token with a size exceeding the token holding area to the controller 30-3.

### 3-3-5. Distributed ledger update

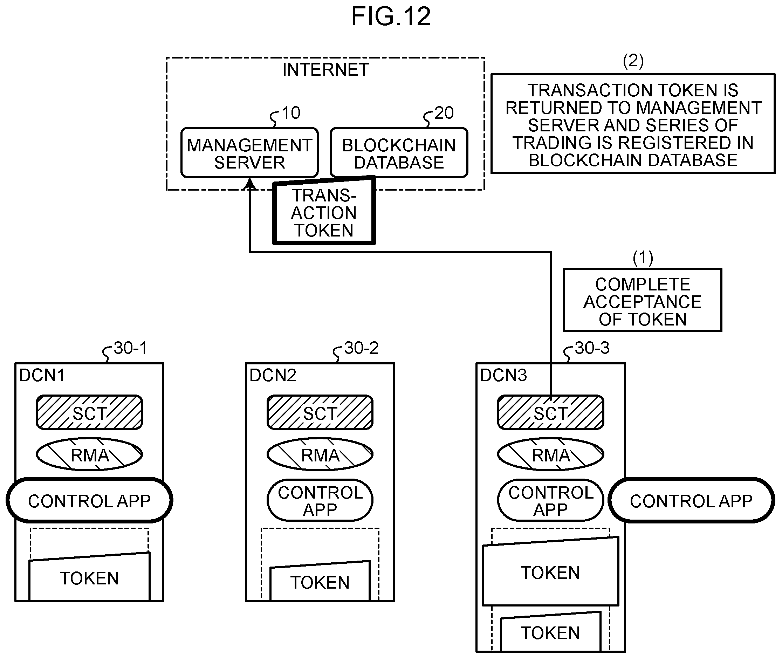

A specific example of the distributed ledger update in the resource management of the plant management system 100 will be described with reference to FIG. 12. FIG. 12 is a diagram illustrating a specific example of the distributed ledger update in the resource management of the plant management system 100. As illustrated in FIG. 12(1), the controller 30-3 receives, from the controller 30-1, the control application and the held token with the size exceeding the token holding area, that is, the same size as the transaction token. As illustrated in FIG. 12(2), the controller 30-3 returns the transaction token to the management server 10. Further, when the transaction token is returned, the management server 10 registers the resource trading history and the token trading history that are a series of trading histories in the blockchain of the blockchain database 20.

In this case, the management server 10 may register, in the blockchain, history information in which the resource trading history and the token trading history are integrated. Further, the management server 10 may register, in the blockchain, resource management information in which the resource trading history and the resource usage status that is continuously monitored are integrated.

### 3-3-6. Effects of resource management

Effects of the resource management of the plant management system 100 will be described. Firstly, in the resource management of the plant management system 100, it is possible to improve efficiency and security of the resource management, and provide a dynamic and robust management solution in the system. Secondly, in the resource management of the plant management system 100, it is possible to use token economy and optimally distribute resources in the system, so that it is possible to ensure stability and sustainability of the system.

In this case, in the resource management of the plant management system 100, as one of features of token economy, with use of a token, it is possible to use a resource only when needed, so that it is possible to realize effective use of resources while preventing wasteful use. Further, in the resource management of the plant management system 100, as one of features of token economy, a user of a resource pays a token, so that it is possible to prevent overuse and realize fair distribution while allowing a different user to use the resource. Furthermore, in the resource management of the plant management system 100, as one of features of token economy, token trading and resource trading are automatically performed, so that it is not needed for users to directly communicate with each other and it is possible to realize automated management for fair and efficient management. As described above, in the resource management of the plant management system 100, with token economy, it is possible to realize a mechanism in which all of resources are most effectively used and realize overall optimization in which adjustment is performed to bring best results to all of users.

### 3-4. Adaptable examples of plant management system 100

Adaptable examples of the plant management system 100 will be described. In the following, adaptable products and an adaptable range will be described.

### 3-4-1. Adaptable products

As an adaptable example of the plant management system 100, adaptable products will be described. The plant management system 100 is adaptable to products of a general open process automation system, and is particularly adaptable to a product of an industrial open system compatible with a standard of a process automation system, industrial Ethernet (registered trademark), an Open Platform Communications-Unified Architecture (OPC-UA), or the like. Further, the plant management system 100 is adaptable to dynamic resource management in a production line management system in a factory or a control system in the manufacturing industry.

### 3-4-2. Adaptable range

As an adaptable example of the plant management system 100, an adaptable range will be described. The plant management system 100 is adaptable to a system part that is aimed at improving resource allocation in various kinds of systems, automatically migrating an application, and improving security management, and in particular, a system part that needs real-time resource adjustment and resource traceability. For example, the plant management system 100 is adaptable to management of various kinds of machines and various kinds of sensors in a manufacturing line, optimization of resources in a process control system, or the like.

### 3-5. Applicable example of plant management system 100

Application examples of the plant management system 100 will be described. In the following, an applicable product and an applicable field will be described.

### 3-5-1. Applicable product

As an application example of the plant management system 100, an applicable product will be described. The plant management system 100 is applicable to a product of an open process automation system, an industrial Internet of Things (IoT) platform, a control system based on OPC-UA, an industrial Ethernet communication system, or the like.

### 3-5-2. Applicable field

As an applicable example of the plant management system 100, an applicable field will be described. The plant management system 100 is applicable to an open process automation system in various kinds of industries, such as the manufacturing industry, the chemical industry, or the energy industry. Further, the plant management system 100 is widely applicable to integration of various kinds of systems of different venders, process automation that need interoperability, and industrial control environments.

### 4. Flow of each of processes of plant management system 100

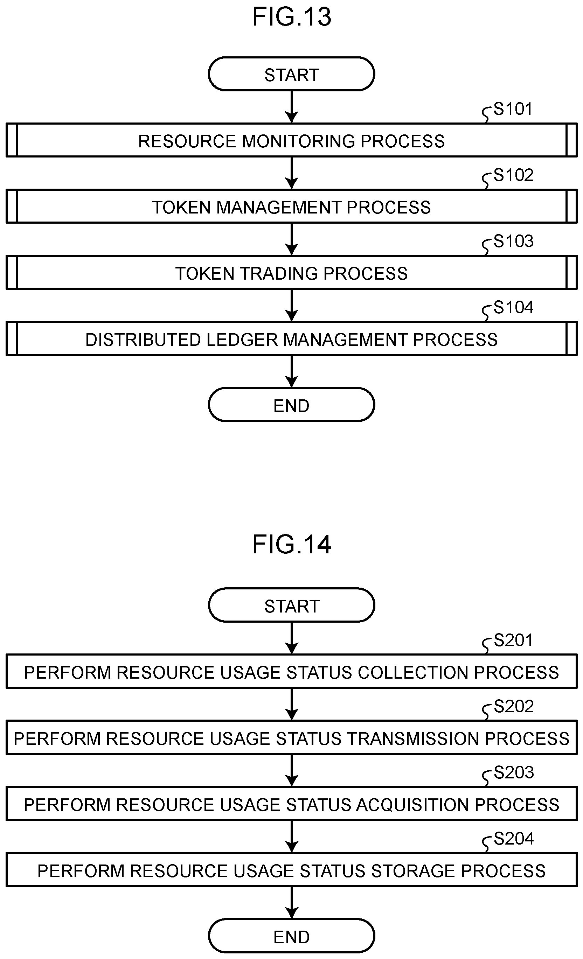

Flows of processes of the plant management system 100 according to one embodiment will be described with reference to FIG. 13 to FIG. 17. In the following, the flow of the entire process of the plant management system 100 will be first described, and thereafter, as each of the processes, a resource monitoring process, a token management process, a token trading process, and a distributed ledger management process will be described.

### 4-1. Entire process of plant management system 100

A flow of an entire process of the plant management system 100 according to one embodiment will be described below with reference to the FIG. 13. FIG. 13 is a flowchart illustrating an example of the flow of the entire process of the plant management system 100 according to one embodiment. Meanwhile, processes from Step S101 to Step S104 below may be performed in different order. Further, some of the processes from Step S101 to Step S104 below may be omitted.

### 4-1-1. Resource monitoring process

Firstly, the plant management system 100 performs a resource monitoring process (Step S101). For example, the plant management system 100 manages monitoring of the resource usage status of each of the controllers 30 by performing processes from Step S201 to Step S204 to be described later.

### 4-1-2. Token management process

Secondly, the plant management system 100 performs a token management process (Step S102). For example, the plant management system 100 manages the held token and the transaction token by performing processes from Step S301 to Step S304 to be described later.

### 4-1-3. Token transaction process

Thirdly, the plant management system 100 performs a token trading process (Step S103). For example, the plant management system 100 manages resource trading and token trading between the controllers 30 by performing processes from Step S401 to Step S406 to be described later.

### 4-1-4. Distributed ledger management process

Fourthly, the plant management system 100 performs a distributed ledger management process (Step S104), and terminates the process. For example, the plant management system 100 registers various kinds of information in the distributed ledger by performing processes from Step S501 to Step S504 to be described later.

### 4-2. Resource monitoring process

A flow of the resource monitoring process of the plant management system 100 according to one embodiment will be described with reference to FIG. 14. FIG. 14 is a flowchart illustrating an example of the flow of the resource monitoring process of the plant management system 100 according to one embodiment. Meanwhile, processes from Step S201 to Step S204 below may be performed in different order. Further, some of the processes from Step S201 to Step S204 below may be omitted.

### 4-2-1. Resource usage status collection process

Firstly, the controller 30 performs a resource usage status collection process (Step S201). For example, the controller 30 causes the resource monitoring agent to collect a resource usage status of the CPU, the memory, the network bandwidth, or the like of the controller 30 at intervals of one second.

### 4-2-2. Resource usage status transmission process

Secondly, the controller 30 performs a resource usage status transmission process (Step S202). For example, the controller 30 transmits the collected the resource usage status to the management server 10 at intervals of one second.

### 4-2-3. Resource usage status acquisition process

Thirdly, the management server 10 performs a resource usage status acquisition process (Step S203). For example, the management server 10 acquires the resource usage status that is transmitted by each of the controllers 30 at intervals of one second.

### 4-2-4. Resource usage status storage process

Fourthly, the management server 10 performs a resource usage status storage process (Step S204), and terminates the resource monitoring process. For example, the management server 10 stores the resource usage status that is acquired from each of the controllers 30 in the resource usage status storage unit 14a for each of the controllers 30.

### 4-3. Token management process

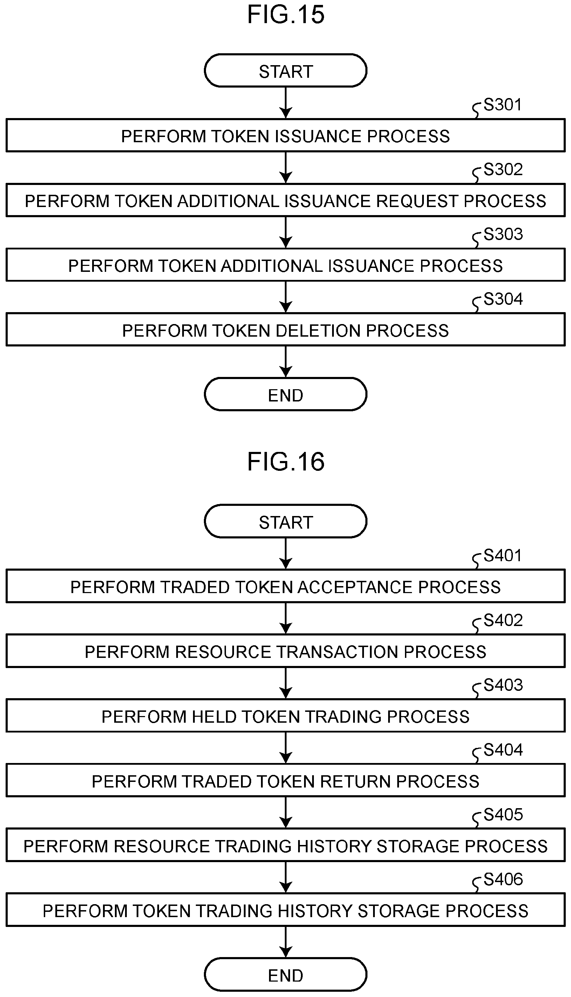

A flow of the token management process of the plant management system 100 according to one embodiment will be described below with reference to FIG. 15. FIG. 15 is a flowchart illustrating an example of the flow of the token management process of the plant management system 100 according to one embodiment. Meanwhile, processes from Step S301 to Step S304 below may be performed in different order. Further, some of the processes from Step S301 to Step S304 below may be omitted.

### 4-3-1. Token issuance process

Firstly, the management server 10 performs a token issuance process (Step S301). For example, when the controller 30 is newly installed in the system, the management server 10 issues a held token and transmits the held token to the controller 30.

### 4-3-2. Token additional issuance request process

Secondly, the controller 30A performs a token additional issuance request process (Step S302). For example, when a calculation load unexpectedly increases and the size of the held token exceeds an upper limit size of the token holding area, the controller 30A requests the management server 10 to issue a transaction token corresponding to the excess size.

### 4-3-3. Token additional issuance process

Thirdly, the management server 10 performs a token additional issuance process (Step S303). For example, when acquiring a token additional issuance request from the controller 30A, the management server 10 issues a transaction token corresponding to the excess size of the controller 30A.

### 4-3-4. Token deletion process

Fourthly, the management server 10 performs a token deletion process (Step S304), and terminates the token management process. For example, when trading of the held token is completed between the controller 30A and the controller 30B, the management server 10 receives the transaction token that is transmitted from the controller 30B, and deletes the transaction token. Further, when the controller 30 is to terminate operation, the management server 10 may receive a held token that is transmitted from the controller 30 that is to terminate the operation, and may delete the held token.

### 4-4. Token transaction process

A flow of the token trading process of the plant management system 100 according to one embodiment will be described below with reference to FIG. 16. FIG. 16 is a flowchart illustrating an example of the flow of the token trading process of the plant management system 100 according to one embodiment. Meanwhile, processes from Step S401 to Step S406 below may be performed in different order. Further, some of the processes from Step S401 to Step S406 below may be omitted.

### 4-4-1. Traded token acceptance process

Firstly, the controller 30B performs a traded token acceptance process (Step S401). For example, the controller 30B accepts a transaction token that is issued by the management server 10.

### 4-4-2. Resource transaction process

Secondly, the controller 30 performs a resource transaction process (Step S402). For example, the controller 30A transmits, to the controller 30B, a control application corresponding to a size exceeding the size of the maximum resource.

### 4-4-3. Held token trading process

Thirdly, the controller 30 performs a held token trading process (Step S403). For example, the controller 30A transmits a held token with the same size as the transaction token to the controller 30B.

### 4-4-4. Traded token return process

Fourthly, the controller 30B performs a traded token return process (Step S404). For example, when accepting the held token from the controller 30A, the controller 30B returns the transaction token to the management server 10.

### 4-4-5. Resource trading history storage process

Fourthly, the management server 10 performs a resource trading history storage process (Step S405). For example, the management server 10 stores the resource trading history that is acquired from each of the controllers 30 in the resource trading history storage unit 14b.

### 4-4-6. Token trading history storage process

Fifthly, the management server 10 performs a token trading history storage process (Step S406), and terminates the token trading process. For example, the management server 10 stores the token trading history that is acquired from each of the controllers 30 in the token trading history storage unit 14c.

### 4-5. Distributed ledger management process

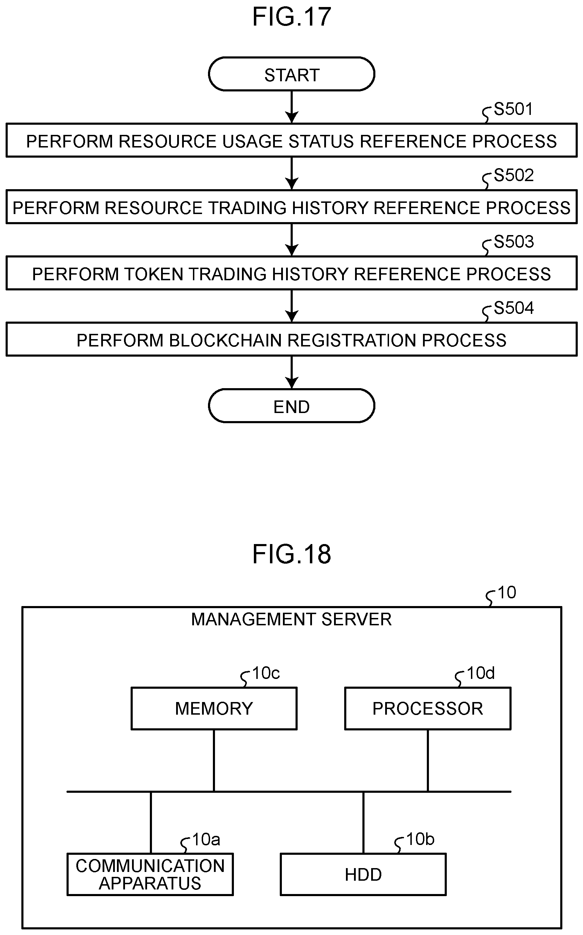

A flow of the distributed ledger management process of the plant management system 100 according to one embodiment will be described below with reference to FIG. 17. FIG. 17 is a flowchart illustrating an example of the flow of the distributed ledger management process of the plant management system 100 according to one embodiment. Meanwhile, processes from Step S501 to Step S504 below may be performed in different order. Further, some of the processes from Step S501 to Step S504 below may be omitted.

### 4-5-1. Resource usage status reference process

Firstly, the management server 10 performs a resource usage status reference process (Step S501). For example, the management server 10 refers to the resource usage status that is stored in the resource usage status storage unit 14a.

### 4-5-2. Resource trading history reference process

Secondly, the management server 10 performs a resource trading history reference process (Step S502). For example, the management server 10 the resource trading history that is stored in the resource trading history storage unit 14b.

### 4-5-3. Token trading history reference process

Thirdly, the management server 10 performs a token trading history reference process (Step S503). For example, the management server 10 refers to the token trading history that is stored in the token trading history storage unit 14c.

### 4-5-4. Blockchain registration process

Fourthly, the management server 10 performs a blockchain registration process (Step S504), and terminates the distributed ledger management process. For example, the management server 10 registers the resource usage status, the resource trading history, and the token trading history that are referred to, in the blockchain that is stored in the blockchain database 20.

### 5. Effects of embodiments

Effects of one embodiment will be described. In the following, first to fourteenth effects corresponding to the processes according to one embodiment will be described.

### 5-1. First effect

Firstly, in one embodiment, the management server 10 issues a transaction token corresponding to a size of a requested resource that is requested by the controller 30A among the plurality of controllers 30 that are included in a system, and acquires, when the requested resource is traded between the controller 30A and the controller 30B that has acquired the transaction token, a token trading history indicating that the controller 30A has transmitted a held token corresponding to a size of the transaction token to the controller 30B. With this configuration, in one embodiment, it is possible to realize dynamic resource management, so that it is possible to optimize resource management of the system.

### 5-2. Second effect

Secondly, in one embodiment, the management server 10 registers the token trading history in a distributed ledger that is shared by users of the system. Therefore, in one embodiment, it is possible to realize secure dynamic resource management, so that it is possible to optimize resource management of the system.

### 5-3. Third effect

Thirdly, in one embodiment, the management server 10 registers the token trading history as the distributed ledger in a blockchain. Therefore, in one embodiment, it is possible to use a blockchain technology, so that it is possible to optimize resource management of the system.

### 5-4. Fourth effect

Fourthly, in one embodiment, each of the controllers 30 has a token holding area corresponding to a maximum size of an available resource that is available to each of the controllers 30. Therefore, in one embodiment, it is possible to use a token that is associated with a resource, so that it is possible to optimize resource management of the system.

### 5-5. Fifth effect

Fifthly, in one embodiment, when a size of the held token that is held by the controller 30A exceeds an upper limit of the token holding area, the controller 30A transmits a request for issuance of the transaction token. Therefore, in one embodiment, it is possible to perform dynamic resource management in accordance with a request from the controller 30A, so that it is possible to optimize resource management of the system.

### 5-6. Sixth effect

Sixthly, in one embodiment, the controller 30B accepts the held token until a size of the held token that is held by the controller 30B reaches an upper limit of the token holding area. Therefore, in one embodiment, it is possible to perform dynamic resource management in accordance with token economy, so that it is possible to optimize resource management of the system.

### 5-7. Seventh effect

Seventhly, in one embodiment, the available resource is an available area of one of a CPU, a memory, and a network bandwidth. Therefore, in one embodiment, it is possible to perform dynamic resource management based on a physical resource of the controller 30, so that it is possible to optimize resource management of the system.

### 5-8. Eighth effect

Eighthly, in one embodiment, each of the controllers 30 trades the requested resource by migrating an application corresponding to a size of the requested resource from the controller 30A to the controller 30B. Therefore, in one embodiment, it is possible to perform dynamic resource management by application migration, so that it is possible to optimize resource management of the system.

### 5-9. Ninth effect

Ninthly, in one embodiment, each of the controllers 30 trades the requested resource by allowing the controller 30A to temporarily use an available area of one of a CPU, a memory, and a network bandwidth of the controller 30B in accordance with a size of the requested resource. Therefore, in one embodiment, it is possible to perform dynamic resource management by resource distribution, so that it is possible to optimize resource management of the system.

### 5-10. Tenth effect

Tenthly, in one embodiment, when the controller 30B that is independently able to acquire the transaction token is absent in the system, the management server 10 divide the transaction token.

### 5-11. Eleventh effect

Eleventhly, in one embodiment, each of the controllers 30 is able to execute a smart contract, and performs trading of an available resources that is available to each of the controllers 30 and a held token that is held by each of the controllers 30. Therefore, in one embodiment, it is possible to use a smart contract technology, so that it is possible to optimize resource management of the system.

### 5-12. Twelfth effect

Twelfthly, in one embodiment, the management server 10 registers, in the distributed ledger, a resource trading history indicating that an available resource that is available to each of the controllers 30 is traded among the plurality of controllers 30. Therefore, in one embodiment, it is possible to enhance security of the resource trading history, so that it is possible to optimize resource management of the system.

### 5-13. Thirteenth effect

Thirteenthly, in one embodiment, the management server 10 registers, in the distributed ledger, a usage status of a used resource that is used by each of the controllers 30 and that is monitored by each of the controllers 30. Therefore, in one embodiment, it is possible to enhance security of the resource usage status, so that it is possible to optimize resource management of the system.

### 5-14. Fourteenth effect

Fourteenthly, in one embodiment, the system is an open process automation system. Therefore, in one embodiment, it is possible to optimize resource management of an open process automation system.

### 6. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 7. Hardware

A hardware configuration example of the management server 10 will be described below with reference to FIG. 18. Meanwhile, the other apparatuses may have the same hardware configurations. FIG. 18 is a diagram illustrating a hardware configuration example according to one embodiment. As illustrated in FIG. 18, the management server 10 includes a communication apparatus 10a, a Hard Disk Drive (HDD) 10b, a memory 10c, and a processor 10d. Further, all of the units illustrated in FIG. 18 are connected to one another via a bus or the like.

The communication apparatus 10a is implemented by a network interface card or the like, and performs communication with a different server. The HDD 10b stores therein a program or a database for implementing the functions as illustrated in FIG. 2.

The processor 10d reads, from the HDD 10b or the like, a program that executes the same processes as those of each of the processing units illustrated in FIG. 2, loads the program onto the memory 10c, and executes the processes that implement each of the functions illustrated in FIG. 2. For example, the processes implement the same functions as those of each of the processing units that are included in the management server 10. Specifically, the processor 10d reads, from the HDD 10b or the like, a program that has the same functions as those of the acquisition unit 15a, the management unit 15b, the registration unit 15c, and the like. Further, the processor 10d executes a process for implementing the same processes as those of the acquisition unit 15a, the management unit 15b, the registration unit 15c, and the like.

As described above, the management server 10 operates as an apparatus that reads and executes the program according to one embodiment to implement various kinds of processing methods. Further, the management server 10 is able to implement the same functions as those of the embodiments as described above by causing a medium reader to read the above-described program from a recording medium and executing the above-described read program. Meanwhile, the program described in one embodiment need not always be executed by the management server 10. For example, the present invention may be applied in the same manner even when a different computer or a different server apparatus executes the above-described program or the different computer and the different server apparatus execute the above-described program in a cooperative manner.

The program according to one embodiment may be distributed via a network, such as the Internet. Further, the program may be recorded in a computer readable recording medium, such as a hard disk, a flexible disk (FD), a compact disc (CD)-ROM, a Magneto-Optical disk (MO), or a Digital Versatile Disk (DVD), and may be executed by being read from the recording medium by a computer.

According to one aspect of the present disclosure, it is possible to optimize resource management in the system.

## Claims

1. A management apparatus (10) comprising:
a processor that
issues a first token corresponding to a size of a requested resource that is requested by a first device among a plurality of devices (30) that are included in a system, and
acquires, when the requested resource is traded between the first device and a second device that has acquired the first token, a token trading history of transmission of a second token corresponding to a size of the first token from the first device to the second device.

2. The management apparatus (10) according to claim 1, wherein the processor registers the token trading history in a distributed ledger (20) that is shared by users of the system.

3. The management apparatus (10) according to claim 2, wherein the processor registers the token trading history in a blockchain as the distributed ledger (20).

4. The management apparatus (10) according to any one of claims 1 to 3, wherein each of the devices (30) has a token holding area corresponding to a maximum size of an available resource of each of the devices.

5. The management apparatus (10) according to claim 4, wherein when a size of a token held by the first device exceeds an upper limit of the token holding area, the first device transmits a request for issuance of the first token.

6. The management apparatus (10) according to claim 4 or 5, wherein the second device accepts the second token until a size of a token held by the second device reaches an upper limit of the token holding area.

7. The management apparatus (10) according to any one of claims 4 to 6, wherein the available resource is an available area of one of a Central Processing Unit (CPU), a memory, and a network bandwidth.

8. The management apparatus (10) according to any one of claims 1 to 7, wherein each of the devices (30) trades the requested resource by migrating an application corresponding to a size of the requested resource from the first device to the second device.

9. The management apparatus (10) according to any one of claims 1 to 8, wherein each of the devices (30) trades the requested resource by allowing the first device to temporarily use an available area of one of a CPU, a memory, and a network bandwidth of the second device in accordance with a size of the requested resource.

10. The management apparatus (10) according to any one of claims 1 to 9, wherein when the second device that is able to acquire the first token by itself is absent in the system, the processor divides the first token.

11. The management apparatus (10) according to any one of claims 1 to 10, wherein the plurality of devices (30) are a plurality of controllers that are able to execute a smart contract and are configured to perform trading of available resources of the respective devices and tokens held by the respective devices.

12. The management apparatus (10) according to claim 2 or 3, wherein the processor registers, in the distributed ledger (20), a resource trading history indicating that an available resource of each of the devices is traded among the plurality of devices (30).

13. The management apparatus (10) according to claim 2 or 3, wherein the processor registers, in the distributed ledger (20), a usage status of a used resource that is used by each of the devices and that is monitored by each of the devices (30).

14. The management apparatus (10) according to any one of claims 1 to 13, wherein the system is an open process automation system.

15. A management method implemented by a computer (10), the management method comprising:
issuing a first token corresponding to a size of a requested resource that is requested by a first device among a plurality of devices (30) that are included in a system, and
acquiring, when the requested resource is traded between the first device and a second device that has acquired the first token, a token trading history of transmission of a second token corresponding to a size of the first token from the first device to the second device.

16. A management program that causes a computer (10) to execute a process, the process comprising:
issuing a first token corresponding to a size of a requested resource that is requested by a first device among a plurality of devices (30) that are included in a system, and
acquiring, when the requested resource is traded between the first device and a second device that has acquired the first token, a token trading history of transmission of a second token corresponding to a size of the first token from the first device to the second device.
